Europäisches Patentamt

**European Patent Office**

Office européen des brevets

(19)

(11) Publication number: **0 234 779**
A1

(12) **EUROPEAN PATENT APPLICATION**

(21) Application number: **87301025.0**

(22) Date of filing: **05.02.87**

(51) Int. Cl.³: **B 65 G 47/14**

(30) Priority: **25.02.86 GB 8604604**

(43) Date of publication of application:
**02.09.87 Bulletin 87/36**

(84) Designated Contracting States:
**AT BE CH DE ES FR GB GR IT LI LU NL SE**

(71) Applicant: **Jakob Schlaepfer & Co AG**
**Teufenerstrasse 11**
**9001 St Gallen(CH)**

(72) Inventor: **Kurihara, Akira**
**187 Dodo Sakai**
**Sawa Gunma 370-01(JP)**

(74) Representative: **Evans, David Charles et al,**
**F.J. CLEVELAND & COMPANY 40-43, Chancery Lane**
**London, WC2A 1JQ(GB)**

(54) **Apparatus for ordered supply of shaped articles.**

(57) An apparatus is provided for supplying orientated articles (9) preferably of decorative rhinestones, to a dispensing station (6) which apparatus comprises a generally disc shaped vibratory member (4) adapted to accommodate articles on an internal base thereof, said vibratory member including a helical guideway (5) linking said base area to a dispensing station (6) whereby in use vibration of the vibrating member causes the orientated articles to move along the helical guideway to the dispensing station, said dispensing station including transfer means (10) to transfer arriving articles to a placing means (11) adapted to position the articles onto a carrier (2).

The apparatus may include optical sensor (13) located at or adjacent the dispensing station (6) to sense the orientation and/or presence of articles. A rejection means may be associated with the sensor to eject incorrectly orientated articles.

FIG.2

EP 0 234 779 A1

- 1 -

## APPARATUS FOR ORDERED SUPPLY OF SHAPED ARTICLES

This invention relates to the transfer of articles preferably decorative articles to a sheet material either by the direct transfer and placing of the article onto the material or via an intermediate pattern formed by transferring and placing the articles on a suitable carrier sheet which can be used in said transfer. The invention relates in a particular aspect to a method and apparatus for providing an ordered supply of articles for adhering to a carrier tape substrate which can be employed during the transfer and placing of the articles onto a the material or carrier sheet.

Copending UK Patent Application No 8530561 describes a carrier tape having apertures therein on which decorative articles are carried. Apparatus is described for aligning the apertures with a transfer head which can act on the carried decorative article to effect transfer thereof to a substrate for enriching sheet material by embellishment with a design of such decorative articles.

- 2 -

It will be apparent that in order to effect transfer of the articles to the sheet material, it is necessary to provide the carrier tape with the decorative articles carried thereon, in this case at spaced intervals over the apertures provided in the tape. Clearly, transfer and location of articles onto the apertures is a difficult and time consuming exercise. In order to reduce production costs of the tape carrying articles a simple and efficient means is required to provide an ordered supply of decorative articles to an apparatus placing the articles in position over the apertures.

It is an object of the present invention to provide an improved apparatus for providing an ordered supply of articles so that they can be transferred simply and easily into position over apertures formed in a carrier tape.

According to a first aspect of the invention there is provided an apparatus for supplying orientated articles to a dispensing station, which apparatus comprises a generally dish-shaped vibratory member adapted to accommodate articles on an internal base thereof, said vibratory member including a helical

- 3 -

guideway linking said base area to the dispensing station whereby in use vibration of the vibrating member causes the orientated articles to move along the helical guideway to the dispensing station, said dispensing station including transfer means to transfer arriving articles to a placing means adapted to position the articles onto a carrier.

According to a second aspect of the invention there is provided a method for the transfer of orientated articles onto a carrier, which method comprises subjecting a plurality of shaped articles to vibratory motion to cause them to move along a rising helical path in a desired orientation to a dispense station in a generally sequential fashion,

causing said articles individually in engage indexing means, causing a sensor associated with the indexing means to verify the presence and/or orientation of the article, and moving the indexing means upon verification to a position relative to a carrier, thereby to release the article correctly orientated in a desired position thereupon. In this way, a supply of articles can be located on the base area and the vibration means operated so that the articles travel up the guide-way. The articles then

- 4 -

arrive at the dispensing station where they are transferred to a placing station for positioning onto a carrier, preferably a carrier tape. Consequently, a single file of decorative articles can be produced which allows simple transfer and subsequent positioning of the articles onto a tape.

In one embodiment of the invention suitable for selected decorative articles, the guide-way is formed to support said travel only when the selected articles have a predetermined orientation. This apparatus is particularly convenient for decorative articles having, say, a plane base surface and a decorative upper surface, such as rhinestones. As a result, the arriving articles have a predetermined orientation which is conveniently with the decorative articles having their decorative surface directed upwards from the guide-way.

Preferably, the groove incorporates blocking means located to produce a single file of decorative articles arriving at the dispensing station. By having a single file of decorative articles, transfer of the arriving article to the placing station is simplified.

In one embodiment of the invention, the apparatus includes sensor means located at the transfer means, to sense a predetermined orientation of the articles, and rejection means connected to the sensor means and responsive thereto to eject incorrectly oriented articles. In a preferred embodiment, the sensor means comprises optical sensor means adapted to sense reflections from the decorative article when that article is correctly orientated. This reduces the risk of the tape eventually carrying incorrectly oriented articles.

In another embodiment of the invention, the placing means comprises a rotating wheel having recesses located therein capable of receiving and retaining the articles during rotation, and including shelf means for supplying the arriving articles to said recesses. This embodiment is particularly convenient since it allows each article to be individually transferred to the placing station for positioning onto the carrier tape. Conveniently, the placing means includes guide means for guiding a placed article to a position which is central over an aperture provided in said tape.

- 6 -

An example of the present ivention will now be described by way of illustration only, with reference to the accompanying drawings, in which:-

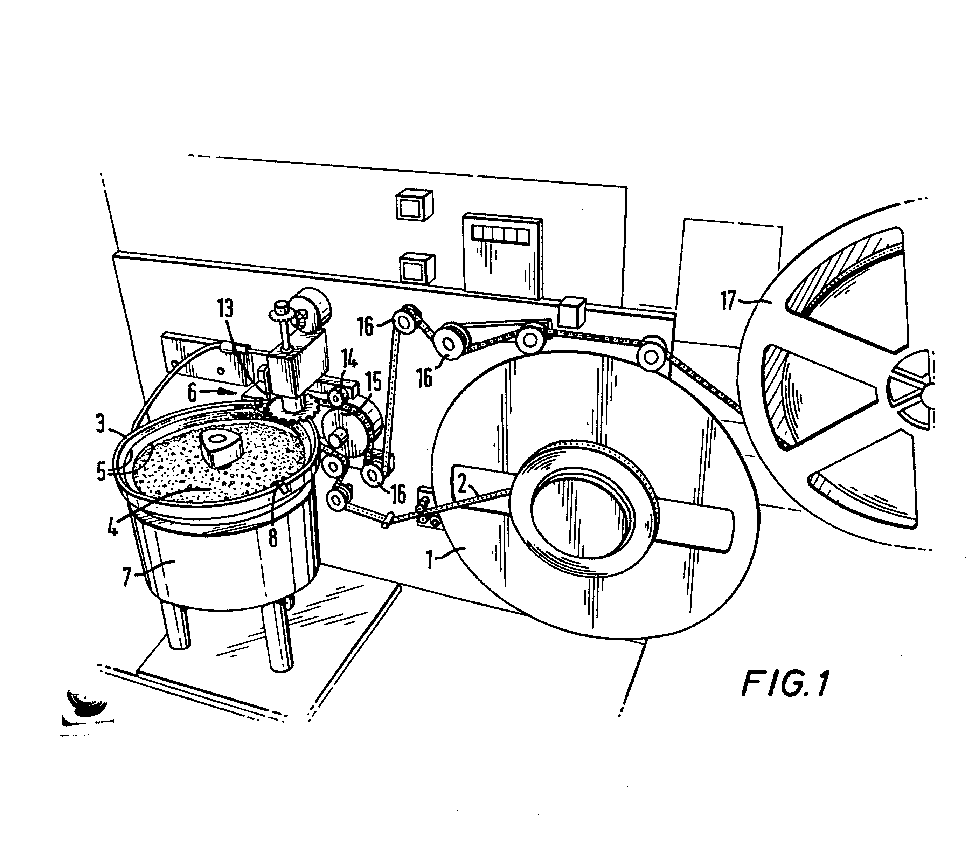

Figure 1 illustrates an oblique front view of one embodiment of the present invention.

Figure 2 illustrates an enlarged view of the articles arriving at the transfer means.

Referring to the drawings, a spool 1 retains carrier tape 2 which has an adhesive coating on one side thereof. The carrier tape is also provided with a regular series of apertures as can be seen from the drawing. The tape is fed to a head 6 including transfer means and a placing station.

A generally dish-shaped member 3 has the base area 4 covered with decorative articles 9. A helical groove or guide-way 5 extends around the dish-shaped member 3 to link the base area 4 to the head 6. The member 3 is also located on top of a vibration unit 7 which vibrates the dish member 3 in a manner to cause the decorative articles on the base to enter and travel up the guide-way. Typically, the vibration unit 7 provides an assymetrical vibration pattern. As the deocrative articles travel up guide-way 5 they encounter a block 8 which restricts the guide-way width to allow only single file passage of decorative articles thereby.

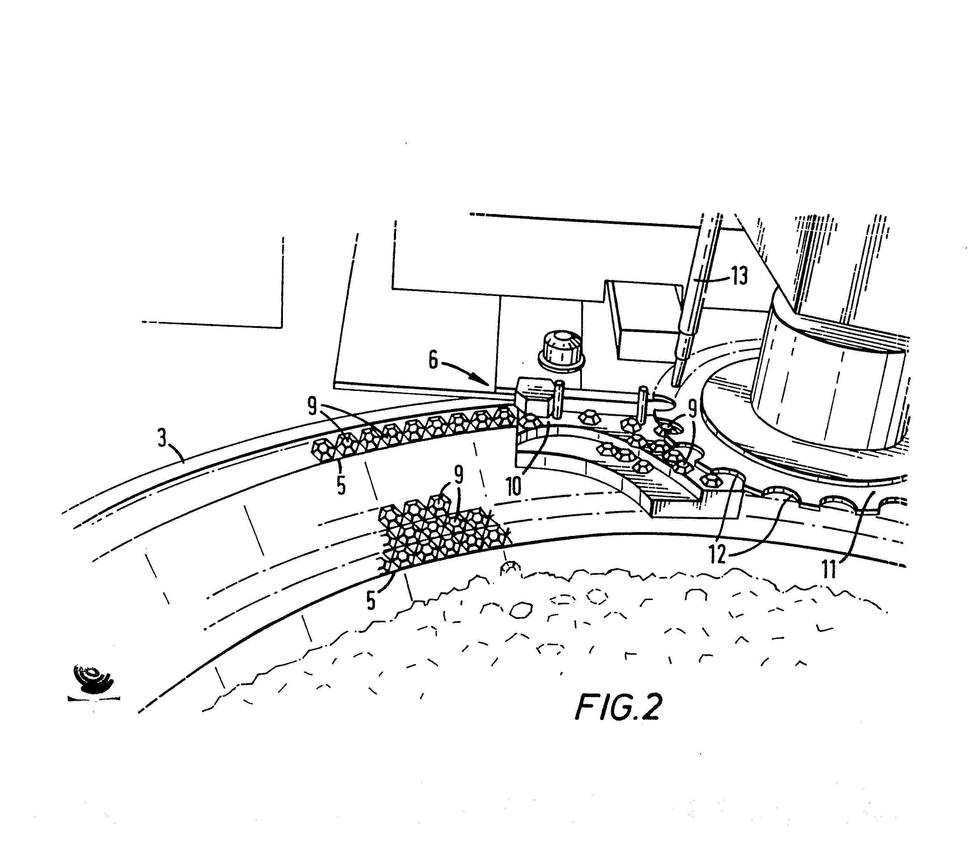

Referring more specifically to Figure 2, the decorative articles 9 in the guide-way arrive at a shelf 10 forming part of the transfer means. As the arriving articles slide onto the shelf 10, the effect of the vibration unit 7 is transmitted to the shelf so that the articles travel across the shelf. A rotating wheel 11 is provided on the other side of the shelf, as illustrated, this wheel including a plurality of recesses 12 shaped to receive decorative articles and having an internal curvature suitable to retain the articles within the recesses as the wheel rotates. It will be apparent that not all the arriving articles actually enter a recess 12 and some move out of position and because of the vibration of the shelf 10 fall back to the articles on the base area 4.

An optical sensor 13 is provided above the rotating recesses 12 to detect correct orientation of the decorative articles therein. In this case,

- 8 -

rhinestones are being transferred and the sensor means 13 detects reflection of light from the upper decorative surface of the stone. If incorrect orientation of the article is detected suitable ejection means (not shown) are provided to remove the incorrectly oriented article from the recess. It will be apparent that this process also detects whether an article is in the rotating recess.

The dispensing station head 6 includes a placing station which in combination with the rotating wheel locates articles from the recesses over apertures in the tape fed to the head. As a correctly oriented article is located over an aperture, piston means acts on the article to press it into contact with the adhesive coating on the tape. It will be apparent that guides can be provided to ensure precise central location of the article over the aperture. In addition, the rotation of the wheel, actuation of the pistion means and advance of the tape can be controlled by a suitable control means. Thereafter, the tape carrying the article passes between pressure rollers 14 and 15 which increase adhesive the contact between the article and the tape. This ensures a gradual increase in the pressure applied to the

- 9 -

article and tape to ensure a good adhesive contact between the tape and the article. Guide rollers 16 are provided to guide the tape to a take up spool 17.

It will be apparent that the figures show a preferred embodiment of the present invention wherein the guide-way is shaped to ensure the articles travel up the guide-way in a preferred orientation. This is particularly suitable for the case of rhinestones which have a preferred orientation in their subsequent use. Of course, the guide-way could be formed in a different way for articles which do not have a preferred orientation. It is also apparent that the transfer means at the head 6 is particularly convenient for receiving a single file of articles as they arrive at the shelf 10. This enhances the likelihood of vibration causing the articles on the shelf 10 to enter recesses 12 in the wheel 11.

CLAIMS:

1. An apparatus for supply orientated articles (9) to a dispensing station (6), which apparatus comprises a generally dish-shaped vibratory member (4) adapted to accommodate articles on an internal base thereof, said vibratory member including a helical guideway (5) linking said base area to a dispensing station (6), whereby in use vibration of the vibrating member causes the orientated articles to move along the helical guideway to the dispensing station, said dispensing station including transfer means 10 to transfer arriving articles to a placing means (11) adapted to position the articles onto a carrier (2).

2. Apparatus as claimed in claim 1 characterised in that the articles 9 are caused to move in single file in the guideway either prior to or at the dispensing station.

3. Apparatus as claimed in either preceding claim characterised in that the guideway (5) is adapted to

- 11 -

support travel of the articles only when the articles have a predetermined orientation.

4. Apparatus as claimed in any preceding claim characterised by a sensor (13) located at the dispensing station (6) to sense the orientation and/or presence of articles, and rejection means associated with the sensor to eject incorrectly orientated articles.

5. Apparatus as claimed in claim 4 characterised in that the sensor (13) is an optical sensor adapted to sense reflection from a reflective surface of said article when that article is correctly orientated.

6. Apparatus as claimed in any preceding claim characterised in that the placing means (11) comprises a rotating wheel having recesses (12) located therein capable of receiving and retaining the article during rotation, and wherein the transfer means includes a shelf (10) for supplying the articles (9) to the recesses (12) and for returning excess articles (9) to the base (4).

7.     Apparatus as claimed in any preceding claim wherein the placing means (11) includes guide means to position an article at a desired location on a carrier tape (2) and pressure means to urge the article into abutment with said carrier tape.

8.     A method for the transfer of orientated articles onto a carrier, which method comprises subjecting a plurality of shaped articles (9) to vibratory motion to cause them to move along a rising helical path (5) in a desired orientation to a dispense station (6) in a generally sequential fashion,

       causing said articles to individually engage in indexing means (12),

       causing a sensor (13) associated with said indexing means (12) to varify the presence and/or orienation of an article (9) and moving the indexing means upon varification to a position relative to a carrier, thereby to release the article correctly orientated in a desired position thereupon.

9.     A method as claimed in claim 8 characterised in that the sequential fashion is single file, the articles are reflected, and the sensor (13) is an

- 13 -

optical sensor which senses a reflection from a facet of said articles when said articles are correctly orientated and present.

0234779

FIG.1

FIG.2

European Patent Office

**EUROPEAN SEARCH REPORT**

| | DOCUMENTS CONSIDERED TO BE RELEVANT | | EP 87301025.0 |
|---|---|---|---|

| Category | Citation of document with indication, where appropriate, of relevant passages | Relevant to claim | CLASSIFICATION OF THE APPLICATION (Int Cl 4) |
|---|---|---|---|
| X | GB - A - 1 087 077 (AUTOMATION DEVICES, INC.) | 1,2,3,6 | B 65 G 47/14 |
| Y | * Totality * | 8 | |
| | -- | | |
| X | DE - B2 - 2 614 224 (SHINKO ELEC-TRIC CO) | 4,5,9 | |
| Y | * Column 1; fig. 2 * | 8 | |
| | -- | | |
| A | US - A - 3 983 992 (GRAY et al.) | 1,8 | |
| | * Fig. 3 * | | |
| | -- | | |
| A | DE - A - 1 481 027 (AYLESBURY AUTOMATION LTD) | 1,8 | |
| | * Fig. 1 * | | |
| | ---- | | |

| | | | TECHNICAL FIELDS SEARCHED (Int Cl 4) |
|---|---|---|---|
| | | | B 65 G 47/00 |

The present search report has been drawn up for all claims

| Place of search | Date of completion of the search | Examiner |
|---|---|---|
| VIENNA | 18-05-1987 | PISSENBERGER |